# EUROPEAN PATENT APPLICATION

(11) **EP 2 153 757 A1**
(43) Date of publication of application: **17.02.2010**
(21) Application number: 09009611.6
(22) Date of filing: 24.07.2009
(51) Int. Cl.: A47J 27/56, A47J 43/044

(54) **Device to heat without boiling milk with or without formation of milk cream**

(30) Priority: 25.07.2008 IT BO20080464
(71) Applicant: AXEL SRL, 50041 Calenzano (IT)
(72) Inventor: Bernardini, Leandro, 5004 Calenzano (Florence) (IT)
(74) Representative: Paolini, Elena

(57) **Abstract**

The device, comprising a container (1) with handle (2) and a cover (3); consists of an electric circuit (5) fed through batteries (4), a thermal sensor (6) housing in a cylindrical protruding part (12), a switch (7) with three selection functions (7A, 7B, 7C), an acoustic signal (8), a motor (9) connected with a whisk (11) and a push-botton (10).

## Description

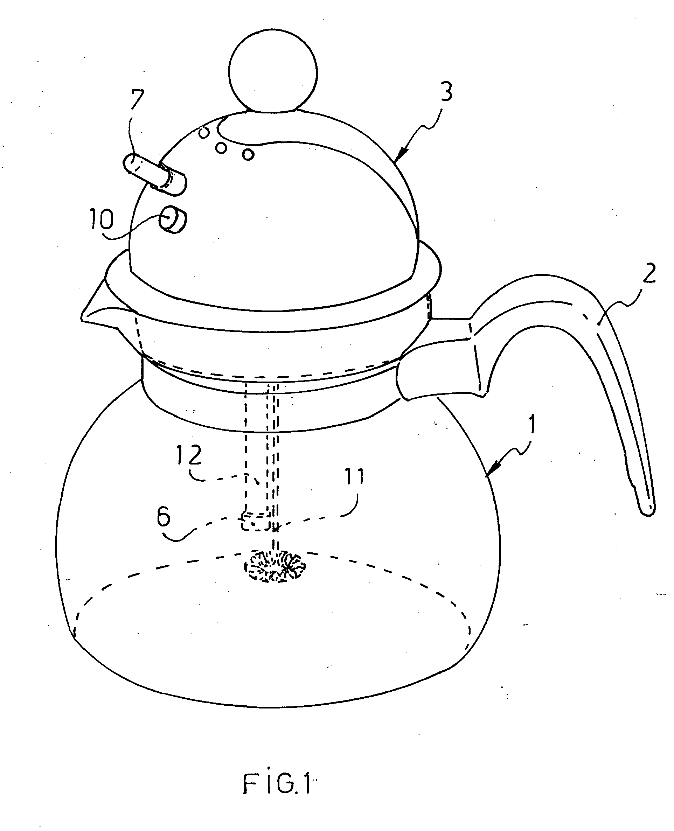

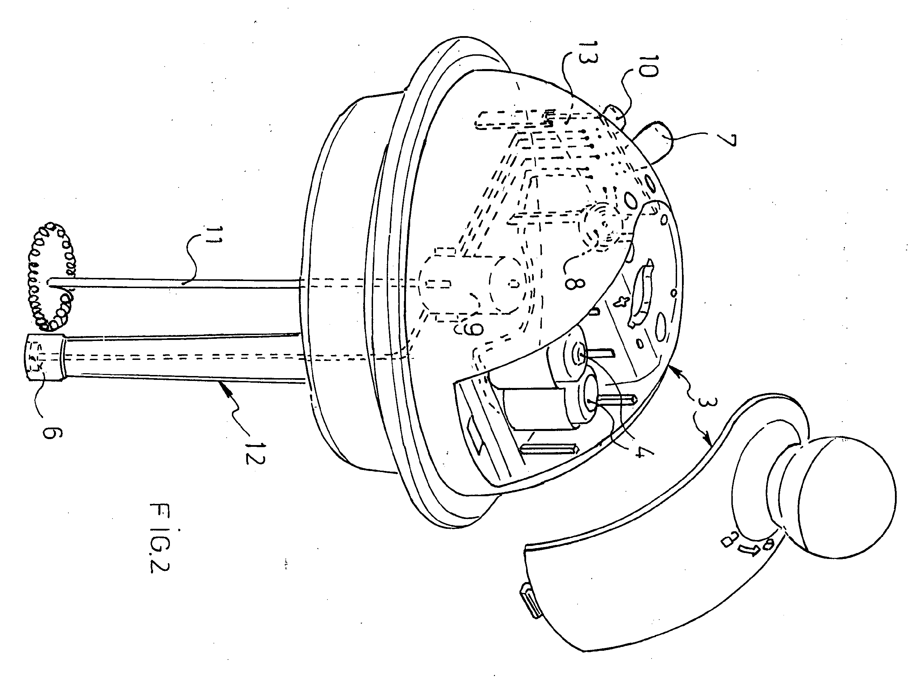

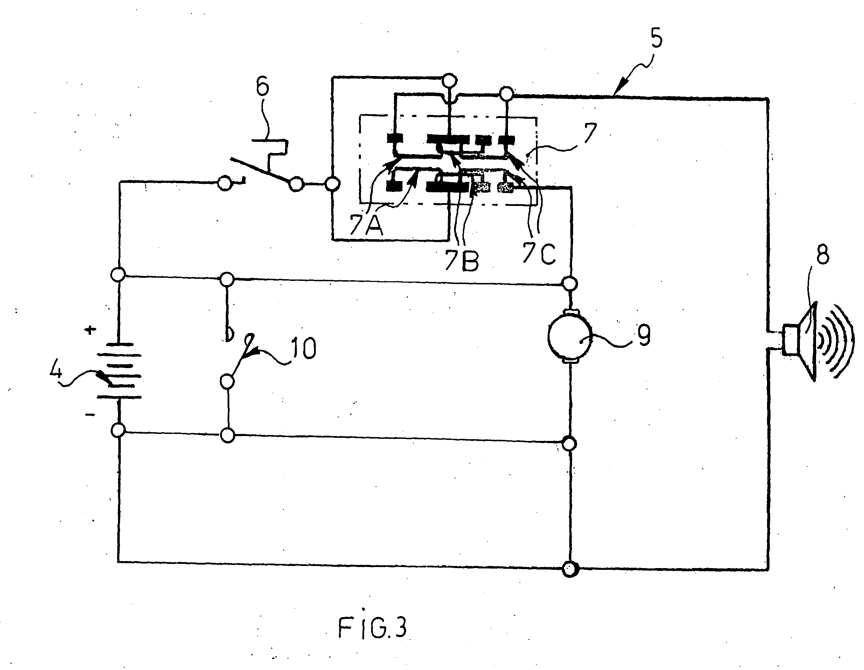

The invention refers to a container for milk or such able to avoid, in heating step, the boiling of the content to preserve the nutritional substances. In fact, it is known that to boil the milk determines the destruction of organic substances for the health. In the field of machines and apparatuses for obtaining milk cream are known subject-matters that provide to have the milk cream by means of vapour or whisk devices. The known applications in the art, however, are not able to set the optimal temperature of heating of the milk without that this lost, for too much heat, the nutritional substances in it contained. In the art are known apparatuses, as for instance the apparatus described in the utility model FI2006U000064 which provides, by a thermal probe, to avoid the discharge of the milk from the container before the boiling step. Subject-matter of the present invention is a device to have milk with or without cream to be used for cappuccino or drinks based onto milk without the boiling of the content, so able to give a drink that conserved unchanged all the nutritional substances of the milk or such that otherwise go lost with the boiling. Further, the invented device permits to have hot milk to be used for cappuccino or chocolate with milk to drink with no high temperature or cold. Moreover, with the invented device is possible to have cappuccino or other drinks based onto soya-bean milk. In fact, it is known that the soya-bean milk must not be boiled before drinking it. The invented device permits also the use for water-soluble drinks in which the boiling is not requested. These and other aims and advantages of the invention are bigger to be understood from the following detailed description and from the enclosed drawing of sheets 1, 2 and 3 that show the invention as a simple example not limiting. In particular in sheet 1 figure 1 is perspective view of the invented device. In sheet 2 figure 2 is perspective view of the container cover. In sheet 3 figure 3 is view of the electric circuit of the invention. In a preferred embodiment but not exclusive the invented device consists of a container 1 with handle 2. On the upper part the container 1 provides a cover 3 inside which are housing the batteries 4 which feed the electric circuit 5. Said electric circuit connects and consists of a thermal sensor 6, a switch 7 with three selection functions 7A, 7B and 7C , an acoustic signal 8, a motor 9 and a push-botton 10. The motor is connected with a whisk 11 and the thermal sensor 6 is housing inside a cylindrical protruding part 12 placed in the lower part of the container 1. In working step the invented device is put onto a heat source, with the container 1 filled with the liquid to be heated. The user manually switches on the switch 7 from the central function 7B of off to the function 7A or function 7C on the base to want have the liquid inside the container 1 simply hot without boiling of hot without boiling and with milk cream, to be obtained by starting the motor 9 with whisk 11. When the liquid to heat has reached the temperature, lower to the boiling temperature, and takes this temperature to the thermal sensor 6, with values between 60°C and 70°C, the circuit closes itself and the acoustic signal is started, informing that the set temperature is reached with the switch in function 7A whereas, if the switch is in function 7C, is contemporary started the motor 9 with the whisk 11. Then, the user takes away the invented device from the heat source, switches the switch in the central function 7B, and the liquid heated to a temperature less to the boiling temperature is ready to be used. So it is possible to mix the heating liquid with or without milk cream with coffee to have cappuccino or to obtain other drinks mixed the heating liquid with any other substances. In the case of a no prompt use of the content with milk cream to increase the cream thickness or to have cold milk with cream is starting, with the push-botton 10 working independently to the other components of the circuit, the motor 9 with whisk 11. In all cases of use the liquid contained in the invented device is never boiled so preserving all the nutritional substances in it contained. In a further embodiment the electric circuit is to be realized onto electronic card 13 having the same aims and same components of the electric circuit already described. The invented device so created is possible of variations on the base of the use necessities, all part of the present inventive concept. Further, all the technical particulars are to be changed with others similar.

## Claims

1. Device to heat without boiling milk with or without formation of milk cream comprising a container (1) with handle (2) and cover (3); **characterized in that** it consists of an electric circuit (5) fed through batteries (4), a thermal sensor (6) housing in a cylindrical protruding part (12), a switch (7) with three selection functions (7A, 7B, 7C), an acoustic signal (8), a motor (9) connected with a whisk (11) and a push-botton (10).

2. Device to heat without boiling milk with or without formation of milk cream, **characterized in that** it provides a printed circuit (13) fed through batteries (4) and connected to a thermal sensor (6) housing in a cylindrical protruding part (12), a switch (7) with three selection functions (7A, 7B, 7C), an acoustic signal (8), a motor (9) connected with a whisk (11) and a push- botton (10).

3. Device to heat without boiling milk with or without formation of milk cream, as to the previous claims, **characterized in that** the liquid to be heat without boiling is milk, or soya-bean milk, or chocolate or water-soluble drinks.

4. Device to heat without boiling milk with or without formation of milk cream, as for claims 1 or 2, **characterized in that** the milk, heat or cold , with or without milk cream is to be mixed with coffee to prepare cappuccino or other drinks mixing the same with other substances.
